# EUROPÄISCHE PATENTSCHRIFT

(11) **EP 3 482 864 B1**
(45) Veröffentlichungstag und Bekanntmachung des Hinweises auf die Patenterteilung: **08.01.2020**
(21) Anmeldenummer: 18195177.3
(22) Anmeldetag: 18.09.2018
(51) Int. Cl.: B23K 9/32, B23K 37/00, B23K 11/36, B23K 15/00, B23K 20/26, F25D 27/00, H05H 1/28, B23K 26/70

(54) **SCHWEISSAGGREGAT-KÜHLVORRICHTUNG**
WELDING UNIT COOLING DEVICE
DISPOSITIF DE REFROIDISSEMENT DE GROUPE DE SOUDAGE

(30) Priorität: 20.09.2017 DE 102017121808
(43) Veröffentlichungstag der Anmeldung: 15.05.2019
(73) Patentinhaber: Carl Cloos Schweißtechnik Gesellschaft mit beschränkter Haftung, 35708 Haiger (DE)
(72) Erfinder: Paul, Christoph, 35756 Mittenaar-Offenbach (DE); Peipert, Cedric, 35768 Siegbach-Übernthal (DE); Friedrich, Frank, 35630 Ehringshausen (DE); Schmidt, Klaus-Peter, 57584 Scheuerfeld (DE)
(74) Vertreter: Lippert Stachow Patentanwälte Rechtsanwälte

(56) Entgegenhaltungen:
- EP-A1- 1 500 458
- DE-A1-102012 107 575
- US-A1- 2004 114 324

## Beschreibung

Die Erfindung betrifft eine Schweißaggregat-Kühlvorrichtung, umfassend einen Kühlmittel-Zulauf und einen Kühlmittel-Ablauf zum Verbinden mit einem Schweißaggregat, einen Kühlmittel-Behälter zum Lagern des Kühlmittels, insbesondere eines Kühlfluids, einen Wärmetauscher zum Kühlen des Kühlmittels sowie eine Pumpeinrichtung zum Bewegen des Kühlmittels innerhalb eines Kühlkreislaufs. Die Erfindung betrifft ferner ein Verfahren zum Betrieb einer solchen Schweißaggregat-Kühlvorrichtung, die an ein zu kühlendes Schweißaggregat angeschlossen ist.

Eine gattungsbildende Schweißaggregat-Kühlvorrichtung ist beispielsweise aus der Offenlegungsschrift EP 1 500 458 A1 bekannt. Diese dient zum Kühlen von Schweißaggregaten innerhalb des jeweiligen Schweißsystems, in welchen Abwärme erzeugt bzw. abgegeben wird, die zur Vermeidung von Beschädigungen oder gar Zerstörungen von Teilen des Schweißsystems abgeführt wird. Ein derartiges Schweißaggregat, welches während des Betriebs mit Abwärme beaufschlagt wird, kann beispielsweise eine Schweißstromquelle, ein Schweißbrenner und/oder ein zwischen der Schweißstromquelle und dem Schweißbrenner angeordnetes und diese verbindendes Schlauchpaket sein. Insbesondere beim MIG/MAG-, als auch beim WIG-Schweißen erfolgt die Stromkontaktierung der Elektrode am Schweißbrenner in der Nähe des Schweißlichtbogens. Beide genannten Schweißverfahren unterscheiden sich dadurch, dass bei ersterem mit abschmelzender Elektrode gearbeitet wird, während beim zweiten eine nichtabschmelzende WolframElektrode verwendet wird, wobei dann je nach Schweißaufgabe unter Umständen Zusatzwerkstoffe zum Einsatz kommen. In jedem Fall ist es notwendig, den Schweißbrenner, insbesondere den Brennerkopf, in welchem eine Stromkontaktdüse bzw. die Halterung der nichtabschmelzenden Elektrode angeordnet sein kann, zu kühlen. Während bei geringen Schweißströmen eine Kühlung u.U. durch das Schutzgas bzw. das aktive Gas und/oder die umgebende Luft erfolgen kann, werden bei höheren Stromstärken Kühlvorrichtungen, wie sie im gattungsbildenden Dokument beschrieben sind, verwendet. In der Regel kommen hierbei flüssige Kühlmittel zum Einsatz. Dabei zirkuliert das Kühlmittel zwischen Schweißaggregat und Schweißaggregat-Kühlvorrichtung, wobei die vom Kühlmittel aufgenommene Wärme über einen in der Schweißaggregat-Kühlvorrichtung angeordneten Wärmetauscher abgekühlt und das Kühlmittel in einem Kühlmittelbehälter gespeichert ist, und wobei eine Pumpeinrichtung für die Bewegung des Kühlmittels innerhalb der Schweißaggregat-Kühlvorrichtung sowie für die Zirkulation des Kühlmittels zwischen Schweißaggregat-Kühlvorrichtung und Schweißaggregat sorgt.

Beim Betrieb einer solchen Schweißaggregat-Kühlvorrichtung besteht häufig das Problem, dass ein abgestimmter Betrieb zwischen Schweißaggregat und Schweißaggregat-Kühlvorrichtung sehr komplex ist und vom Betriebszustand beider Baueinheiten des jeweiligen Schweißsystems abhängt, wobei ein Benutzer eines solchen Schweißsystems, insbesondere eines Systems zum Handschweißen, seine gesamte Konzentration auf das Führen des Brenners richtet. Dies kann dazu führen, dass kritische Betriebssituationen oder Fehlerzustände der Schweißaggregat-Kühlvorrichtung und/oder des Schweißaggregats, die beispielsweise dadurch entstehen können, dass vorgegebene Schwellen von Betriebsparametern überschritten werden, vom Anwender nicht erfasst werden. Insofern liegt der vorliegenden Erfindung die Aufgabe zugrunde, die beschriebenen Nachteile von herkömmlichen Schweißaggregat-Kühlvorrichtungen für Schweißsysteme zumindest teilweise zu beheben.

Diese Aufgabe löst die Erfindung vorrichtungsseitig mit einer Schweißaggregat-Kühlvorrichtung mit den Merkmalen von Anspruch 1. Dabei zeichnet sich die erfindungsgemäße Schweißaggregat-Kühlvorrichtung dadurch aus, dass der Kühlmittelbehälter wenigstens einen zumindest lichtteildurchlässigen, d.h. transluzenten oder gar transparenten, Wandabschnitt aufweist, dass ein Leuchtmittel zur Einstrahlung von Licht in das Innere des Kühlmittelbehälters vorgesehen ist, und dass eine Steuereinrichtung angeordnet ist, welche zur Codierung eines Wertes eines Betriebsparameters, insbesondere eines (aktuellen) Wertes eines Betriebsparameters bzw. eines Betriebszustandes der Kühlvorrichtung und/oder des Schweißaggregats und zur Ansteuerung des Leuchtmittels zur optischen, nichtnummerischen Signalisierung des jeweiligen codierten Wertes des Betriebsparameters bzw. des Betriebszustandes eingerichtet ist.

Durch die beschriebene Gestaltung der erfindungsgemäßen Schweißaggregat-Kühlvorrichtung ist es nun möglich, grundsätzlich beliebige Betriebsparameter bzw. Betriebszustände der Kühlvorrichtung und/oder des Schweißaggregats optisch anzuzeigen, ohne dass der Nutzer beispielsweise konzentriert eine nummerische Anzeige ablesen muss, sodass der Fokus der Aufmerksamkeit weiter auf der Führung des Brenners gerichtet bleiben kann. Auf diese Weise sind beispielsweise Betriebssituationen wie der Ausfall eines Geräts oder das Überschreiten einer vorgegebenen Schwelle eines Betriebsparameters wie einer Kühlmitteltemperatur sofort dadurch anzeigbar, dass ein entsprechendes optisches Signal über den zumindest lichtteildurchlässigen Wandabschnitt des Kühlmittelbehälters nach außen dringt und vom Benutzer ohne starke Konzentration darauf erfassbar ist. In gleicher Weise kann beispielsweise auch durch eine entsprechende optische, nichtnummerische Codierung ein aktueller Wert eines Betriebsparameters, beispielsweise einer Kühlmitteltemperatur, optisch codiert und nichtnumerisch angezeigt werden, ohne das der Nutzer beispielsweise einen numerischen Wert an einem Display ablesen muss. Die Angabe "nichtnummerische" Anzeige oder Signalisierung meint insofern eine Visualisierung die ohne Angaben von Ziffern oder Buchstaben auskommt. Diese Signalisierung kommt insofern ohne direkte optische Darstellung von Ziffern oder Buchstaben aus und kann stattdessen beispielsweise eine codierte optische Darstellung eines numerischen Wertes umfassen, z.B. durch Lichtabstrahlung einer, vom numerischen Wert abhängigen Farbe innerhalb eines Farbspektrums oder Erzeugung einer optischen Pulsfolge mit einer Frequenz, die von dem numerischen Wert abhängt. Vorzugsweise kann der Anwender über die erfindungsgemäße Vorrichtung durch Blick auf den zumindest lichtteildurchlässigen Wandabschnitt gleichzeitig einen Hinweis auf den aktuellen Füllstand des Kühlmittelbehälters als auch durch die zugeordnete optische, insbesondere nichtnummerische, Signalisierung Information über zumindest einen weiteren Betriebsparameter bzw. einen Betriebszustand erhalten.

Es sei darauf hingewiesen, dass die erfindungsgemäße Schweißaggregat-Kühlvorrichtung natürlich auch in selbständig arbeitenden Schweißsystemen, wie Schweißautomaten oder Roboterschweißanlagen einsetzbar ist, sodass eine Überprüfung oder Kontrolle einer aktuellen Betriebssituation ohne großen Aufwand für eine Kontrollperson durchführbar ist, da die zu erfassende Information optisch und nicht nummerisch von der erfindungsgemäß ausgebildeten Schweißaggregat-Kühlvorrichtung angezeigt wird.

Die Angabe "zur Codierung eines Wertes eines Betriebsparameters bzw. eines Betriebszustandes der Kühlvorrichtung und/oder des Schweißaggregats" ist allgemein zu verstehen und kann die Codierung eines Wertes eines Betriebsparameters und/oder die Codierung eines Betriebszustandes der Kühlvorrichtung und/oder des Schweißaggregats meinen. Dabei ist die Angabe "Betriebszustand" auch allgemein zu verstehen und kann beispielsweise eine, durch das Vorliegenden eines jeweils vorgegebenen Wertes von einem oder mehreren Betriebsparameter festgelegte Betriebssituation sein, wie z.B. ein Fehlerzustand oder auch eine Stand-By-Betriebssituation, wobei die jeweilige Kodierung zur Ansteuerung des Leuchtmittels zur optischen, nichtnummerischen Signalisierung des jeweiligen codierten Wertes des Betriebsparameters und/oder des Betriebszustandes genutzt werden kann.

Die erfindungsgemäße Kühlvorrichtung kann beispielsweise zum Kühlen eines Schweißbrenners, zum Kühlen einer Schweißstromquelle und/oder zum Kühlen eines zum Verbinden der Schweißstromquelle mit dem Schweißbrenner vorgesehenen Schlauchpakets eingesetzt werden. Ein solches Schlauchpaket kann beispielsweise Schweißstromleitungen aufweisen, die sich im Betrieb aufgrund des endlichen Widerstandes der Leiter erwärmen können, sodass auch eine Kühlung des Schlauchpakets zweckmäßig sein kann.

In einer besonderen Ausführungsform kann vorgesehen sein, die Schweißaggregat-Kühlvorrichtung im Gehäuse einer Schweißstromquelle anzuordnen, wobei Kühlmittelleitungen für den Kühlmittelzulauf und den Kühlmittelrücklauf innerhalb des Schlauchpakets zum Schweißbrenner verlaufen können, sodass in dieser Ausführungsform sowohl die im Schlauchpaket verlaufende Schweißstromleitung als auch der angeschlossene Schweißbrenner durch das Kühlmittel gekühlt werden können. In dieser Ausführungsform ist es beispielsweise möglich, ein Schweißkabel mit geringerem Querschnitt einzusetzen, sodass das Schlauchpaket flexibler und leichter ausgebildet sein kann.

Weitere vorteilhafte Ausführungsformen der Erfindung sind in der allgemeinen Beschreibung, der Figurenbeschreibung, den Figuren sowie in den Unteransprüchen angegeben.

Zweckmäßigerweise kann vorgesehen sein, dass die Schweißaggregat-Kühlvorrichtung zumindest einen Temperatursensor zur Erfassung einer Kühlmitteltemperatur aufweist. Dabei kann auch vorgesehen sein, dass der Temperatursensor als Temperaturschalter ausgebildet ist, z.B. um bei Überschreiten einer vorgegebenen Temperaturschwelle ein Fehlersignal auszulösen.

Vorzugsweise kann vorgesehen sein, alle zur Festlegung des Volumens des Kühlmittelbehälters wirksame Wandabschnitte aus einem zumindest lichtteildurchlässigen oder einem transparenten Material herzustellen, wodurch die Gestaltung des Kühlmittelbehälters vereinfacht sein kann. In dieser Ausführungsform kann der Kühlmittelbehälter integral aus einem Material hergestellt sein.

Vorzugsweise kann die erfindungsgemäße Schweißaggregat-Kühlvorrichtung eine Schnittstelle bzw. einen Anschluss aufweisen, welche bzw. welcher intern mit der Steuereinrichtung und ausgangsseitig mit einem Anschluss verbunden ist, an welchen das Schweißaggregat anschließbar ist, um von diesem beispielsweise ein Sensorsignal und/oder Steuersignal zu erhalten, das von der Steuereinrichtung zur Ansteuerung des Leuchtmittels zur optischen nichtnummerischen Signalisierung eines Betriebs codierbar ist. Dabei kann dieser Anschluss als analoger Sensoranschluss oder auch als digitaler Anschluss zur Übermittlung von Signaldaten ausgebildet sein. Vorzugsweise kann dabei auch ein Feldbus zum Einsatz kommen. Über die angegebene Schnittstelle sind Daten bzw. Informationen vom Schweißaggregat zur Schweißaggregat-Kühlvorrichtung übermittelbar und von dieser zur Ansteuerung des Leuchtmittels zur optischen nichtnummerischen Signalisierung des jeweiligen codierten Wertes eines Betriebsparameters bzw. eines Betriebszustandes des Schweißaggregats anzeigbar.

In ähnlicher Weise können Sensoren in der Schweißaggregat-Kühlvorrichtung zur Erfassung eines Wertes eines Betriebsparameters, beispielsweise einer Kühlmitteltemperatur oder eines Betriebszustandes der Schweißaggregat-Kühlvorrichtung vorgesehen sein, die mit der Steuereinrichtung verbunden sind, sodass diese die erfassten Informationen bzw. Werte zur optischen, nichtnummerischen Signalisierung durch zugeordnete Ansteuerung des Leuchtmittels anzeigen kann.

Zweckmäßigerweise kann der Anschluss zur Übermittlung von Sensorsignalen und/oder Steuersignalen als bidirektional arbeitende Schnittstelle, insbesondere Steuerschnittstelle ausgebildet sein, sodass Informationen zwischen Schweißaggregat und zugeordneter Schweißaggregat-Kühlvorrichtung austauschbar sind. Hierdurch kann beispielsweise eine Fehlfunktion vom Schweißaggregat an die Kühlvorrichtung gemeldet und durch entsprechendes Ansteuern des Leuchtmittels von diesem angezeigt bzw. signalisiert und/oder Sicherheitsfunktionen ausgelöst werden, beispielsweise dadurch, dass die Stromversorgung für das Schweißaggregat unterbrochen wird. In ähnlicher Weise kann über eine bidirektional arbeitenden und zwischen Schweißaggregat-Kühlvorrichtung und Schweißaggregat angeordnete Schnittstelle Betriebszustandsinformation von der Schweißaggregat-Kühlvorrichtung an das Schweißaggregat übermittelt werden, beispielsweise eine Fehlfunktion, sodass im Ansprechen darauf das Schweißaggregat einen sicheren Betriebszustand einstellt, beispielsweise in einen Standby-Modus übergeht.

In einer weiteren Ausführungsform kann die erfindungsgemäße Schweißaggregat-Kühlvorrichtung auch weitere Eingangsschnittstellen, insbesondere in Form einer weiteren Steuerschnittstelle umfassen, beispielsweise zum Anschluss an ein Zusatzgerät zum Austausch von Informationen bzw. Daten zwischen Zusatzgerät und Schweißaggregat-Kühlvorrichtung.

In einer Ausführungsform kann die erfindungsgemäße Schweißaggregat-Kühlvorrichtung als einzelnes Gerät ausgebildet sein, das ein zugeordnetes Gehäuse aufweist und benachbart zu dem zugeordneten Schweißaggregat innerhalb des Schweißsystems angeordnet werden kann. In einer zweckmäßigen Ausführungsform kann auch vorgesehen sein, die erfindungsgemäße Schweißaggregat-Kühlvorrichtung in einem Gehäuse einer Baueinheit des Schweißsystems, beispielsweise im Gehäuse der Schweißstromquelle anzuordnen. In dieser Ausführung nimmt das Gehäuse der kombinierten Schweißkomponente sowohl die Stromquelle als auch die Schweißaggregat-Kühlvorrichtung auf und schützt diese.

Um dem Benutzer einen Blick auf den zumindest lichtteildurchlässigen Wandabschnitt des Kühlmittelbehälters zu ermöglichen, kann vorgesehen sein, dass das Gehäuse zumindest einen Offenabschnitt, der beispielsweise als Ausnehmung wie ein Schlitz ausgebildet sein kann, umfasst. Insofern stellt der Offenabschnitt eine Sicht von außen auf den zumindest lichtteildurchlässigen, d.h. transluzenten oder auch transparenten Wandabschnitt bereit. In einer Ausführungsform kann es auch sein, dass mehrere lichtteildurchlässigen Wandabschnitte am Kühlmittelbehälter und mehrere, jeweils zugeordnete und insbesondere voneinander beabstandete Offenabschnitte am Gehäuse vorgesehen sind, sodass die Signalisierung vom Anwender im Wesentlichen unabhängig von dessen Standort erfasst werden kann.

Die Angabe "Offenabschnitt am Gehäuse,, meint einen optisch offenen Abschnitt im Gehäuse, der z.B. durch eine Ausnehmung im Gehäuse, jedoch z.B. auch durch eine zumindest transluzente oder transparente, in einer solchen Ausnehmung angeordnete optische Abdeckung bereitgestellt sein kann.

Wie erläutert, ist die erfindungsgemäße Schweißaggregat-Kühlvorrichtung ausgebildet, um mittels einer optischen, nichtnummerischen Signalisierung einen aktuellen Wert eines Betriebsparameters bzw. einen Betriebszustand der Kühlvorrichtung und/oder des Schweißaggregats anzuzeigen, wobei dieser jeweilige Betriebsparameterwert bzw. der jeweilige Betriebszustand optisch codiert ist. Insofern ist es grundsätzlich möglich, mit der erfindungsgemäßen Schweißaggregat-Kühlvorrichtung eine Vielzahl derartiger Parameterwerte bzw. Betriebszustände des gesamten Schweißsystems, insbesondere der Schweißaggregat-Kühlvorrichtung und/oder des Schweißaggregats optisch codiert anzuzeigen oder zu signalisieren. Zweckmäßigerweise kann die erfindungsgemäße Schweißaggregat-Kühlvorrichtung eine mit der Steuereinrichtung verbundene Eingabeeinrichtung umfassen, über welche ein Benutzer eine manuelle Auswahl des Parameters der Kühlvorrichtung und/oder des Schweißaggregats ausgewählt werden kann, dessen Wert bzw. Zustand optisch zu codieren ist, sodass dieser über die zugeordnete Ansteuerung des Leuchtmittels optisch codiert signalisierbar, d.h. anzeigbar ist.

Die erfindungsgemäße Schweißaggregat-Kühlvorrichtung kann prinzipiell für die optisch codierte, nichtnummerische Signalisierung einer Vielzahl der innerhalb eines Schweißsystems relevanten Betriebsparameter bzw. Betriebszustände ausgebildet sein und beispielsweise eine Bewertung des Betriebszustandes der Schweißaggregat-Kühlvorrichtung, eine Bewertung des Betriebszustandes des Schweißaggregats, den Füllstand des Kühlmittelbehälters der Schweißaggregat-Kühlvorrichtung, die Kühlmittelzulauftemperatur bzw. Kühlmittelrücklauftemperatur der Schweißaggregat-Kühlvorrichtung oder des Schweißaggregats, die Kühlmitteldurchflussmenge der Schweißaggregat-Kühlvorrichtung oder des Schweißaggregats, der Betriebsstrom des Schweißaggregats, eine sekundärseitigen Temperatur des Wärmetauschers, eine Stromaufnahme der Pumpe des Kühlmittels oder auch eine Wickeltemperatur der Pumpe sein. Wie der Fachmann erkennt, können mit der erfindungsgemäßen Schweißaggregat-Kühlvorrichtung optisch codiert beliebige Betriebszustände und/oder Werte eines Betriebsparameters optisch und nichtnummerisch auf vom Nutzer einfach aufzunehmender Art angezeigt bzw. signalisiert werden.

Zweckmäßigerweise kann in der Steuereinrichtung eine Abbildungsvorschrift zum Abbilden eines Wertes eines Betriebsparameters bzw. eines Betriebszustandes zu einem optischen Zustand des Leuchtmittels zugeordnet werden, wobei allgemein diese Abbildungsvorschrift als Code bezeichnet wird. In einer besonders zweckmäßigen Ausführungsform kann vorgesehen sein, dass mehrere dieser Abbildungsvorschriften hinterlegt sind, wobei jede Abbildungsvorschrift einem der angegebenen Betriebsparameter bzw. einem Betriebszustand der Kühlvorrichtung und/oder der Schweißaggregats zugeordnet ist. Dabei kann vorgesehen sein, dass jedem Zeichen (Wert) aus einer Urbildmenge eindeutig ein Zeichen (Signalisierung) oder eine Zeichenfolge aus einer Bildmenge zugeordnet ist, wodurch die Codierung bestimmt ist. Je nach Abbildungsvorschrift kann eine solche Bildmenge eine vorgegebene Anzahl von Leuchtzuständen des Leuchtmittels umfassen, wobei sich die Leuchtzustände in Bezug auf das spektrale Verhalten des ausgesendeten Lichtes unterscheiden. Dabei kann die Steuereinrichtung ausgebildet sein, einen Wertebereich eines Betriebsparameters einem Farbbereich des Leuchtmittels zuzuordnen, sodass durch entsprechendes Codieren und Ansteuern des Leuchtmittels einem bestimmten Wert eines Betriebsparameters aus der Urbildmenge eine bestimmte Leuchtfarbe des Leuchtmittels innerhalb des möglichen Farbbereichs zugeordnet und über das entsprechende Ansteuern des Leuchtmittels optisch codiert angezeigt bzw. signalisiert wird.

In einer weiteren Ausführungsform kann auch vorgesehen sein, dass die Steuereinrichtung ausgebildet ist, eine vorgegebene Abbildungsvorschrift auszuführen, bei welcher einem Wert eines Betriebsparameters eine Blinkfolgen-Signalisierung zugeordnet wird, wobei ein jeweiliger Betriebsparameterwert einer vorgegebenen Frequenz der Blinkfolgen-Signalisierung entspricht. Beispielsweise kann für einen vorgegebenen Betriebsparameter der jeweilige Wert mittels einer An/Aus-Signalisierung mit vorgegebener Frequenz in eine optische, Signalisierung abgebildet werden, wobei die Frequenz in der Bildmenge jeweils einem jeweiligen Parameterwert zugeordnet ist. Beispielsweise kann vorgesehen sein, dass mit höherem Wert eines Betriebsparameters in der Signalisierung die Frequenz einer An/Aus-Schaltung des Leuchtmittels steigt.

Grundsätzlich kann das Leuchtmittel, welches zur optischen nichtnummerischen Signalisierung des jeweiligen codierten Wertes des Betriebsparameters bzw. des Betriebszustandes ansteuerbar ist, eine beliebige Lichtquelle sein, insbesondere eine LED-Einrichtung, welche ausgebildet sein kann, in Abhängigkeit ihrer Ansteuerung Licht unterschiedlicher Farbe auszusenden. Dabei kann das Leuchtmittel eine einzige LED umfassen, andererseits ist es auch möglich, dass das Mittel eine Mehrzahl von LEDs aufweist, insbesondere von LEDs, welche sich in Bezug auf ihre spektrale Abstrahlcharakteristik unterscheiden. In einer besonderen Ausführungsform kann auch vorgesehen sein, dass das Leuchtmittel als Lichtzeile oder als flächiges Lichtpanel ausgebildet ist, wobei mehrere Punktlichtquellen, insbesondere LEDs in einer Zeilenanordnung bzw. einer flächigen Anordnung zueinander platziert sind. Das Vorsehen einer Mehrzahl von LEDs ermöglicht die Bereitstellung einer höheren Lichtintensität, als auch in der Regel die Bereitstellung einer größeren Bildmenge für die Codierung des jeweiligen Betriebswertes bzw. Betriebszustandes, d.h. eine größere Anzahl von möglichen unterschiedlichen Signalsierungen.

Vorzugsweise kann vorgesehen sein, dass das Leuchtmittel benachbart zum, jedoch außerhalb des Kühlmittelbehälters angeordnet ist, durch einen transluzenten bzw. transparenten Wandabschnitt Licht des Leuchtmittels in das Innere des Kühlmittelbehälters gelangt und den Behälter über den gleichen und/oder einen anderen transluzenten bzw. transparenten Wandabschnitt des Kühlmittelbehälters wieder verlässt. Dabei kann über einen Offenabschnitt wie einen Schlitz im Gehäuse der Kühlvorrichtung Licht und vom Betrachter wahrgenommen werden als optische nichtnummerische Signalisierung des jeweiligen codierten Wertes des Betriebsparameters bzw. des Betriebszustandes der Schweißaggregat-Kühlvorrichtung bzw. des Schweißaggregats.

Insbesondere kann vorgesehen sein, dass das Leuchtmittel außen benachbart zu einem Bodenabschnitt des Kühlmittelbehälters angeordnet ist und der Bodenabschnitt transluzent bzw. transparent ausgebildet ist, sodass das Licht über den transluzenten bzw. transparenten Boden in das Innere des Kühlmittelbehälters einstrahlt. Es kann aber vorgesehen sein, dass das Leuchtmittel außen benachbart zu einem Seitenwandabschnitt und/oder einem Deckenwandabschnitt angeordnet und der Seitenwandabschnitt bzw. Deckenwandabschnitt transluzent bzw. transparent ausgebildet ist, sodass das Licht in das Innere des Kühlmittelbehälters einstrahlt. In dieser Ausführungsform kann Licht des Leuchtmittels durch einen transluzenten bzw. transparenten Wand- und/oder Deckenabschnitt des Kühlmittelbehälters in diesen eingestrahlt werden.

In einer weiteren Ausführungsform kann jedoch auch vorgesehen sein, dass das Leuchtmittel, hermetisch abgedichtet, im Innern des Kühlmittelbehälters angeordnet ist und Licht in das Innere des Behälters abgibt, welches im Bereich eines lichtteildurchlässigen oder transparenten Wandabschnittes den Kühlmittelbehälter verlässt, sodass es von einem Betrachter von außen erfasst bzw. wahrgenommen werden kann. Verfahrensseitig wird die obige Aufgabe gelöst durch ein Verfahren zum Betrieb einer Schweißaggregat-Kühlvorrichtung mit einem von dieser gekühlten Schweißaggregat (siehe Anspruch 14), wobei Kühlmittel, insbesondere eine Kühlflüssigkeit, von der Schweißaggregat-Kühlvorrichtung in das Schweißaggregat im Kreislauf bewegt wird. Dabei fließt im Schweißaggregat, im daran angeschlossenen Schlauchpaket und/oder im daran angeschlossenen Schweißbrenner durch Abwärmprozesse erwärmtes Kühlwasser zurück in die Schweißaggregat-Kühlvorrichtung, wird dort in einem Wärmetauscher abgekühlt, in einem Kühlmittelbehälter gelagert und wieder in das Schweißaggregat bewegt, wobei vorzugsweise zumindest eine Kühlmitteltemperatur gemessen wird. Das erfindungsgemäße Verfahren zeichnet sich dadurch aus, dass ein Wert eines Betriebsparameters bzw. eines Betriebszustandes der Schweißaggregat-Kühlvorrichtung und/oder des Schweißaggregates erfasst, insbesondere gemessen, und codiert wird zur Ansteuerung eines in das Innere des Kühlmittelbehälters einstrahlenden Leuchtmittels zur nichtnummerischen optischen Signalisierung des Wertes eines Betriebsparameters bzw. eines Betriebszustandes der Kühlvorrichtung und/oder des Schweißaggregats durch einen zumindest lichtteildurchlässigen Wandabschnitt des Kühlmittelbehälters hindurch.

Zweckmäßigerweise kann vorgesehen sein, mittels eines Temperaturschalters die Temperatur des Kühlmittels zu überwachen und bei Überschreiten der Kühlmitteltemperatur über eine vorgegebene Temperaturschwelle eine sicherheitsrelevante Aktion auszulösen, beispielsweise ein Warnsignal an eine Steuerung abzugeben und/oder die Schweißaggregat-Kühlvorrichtung bzw. das Schweißaggregat abzuschalten. Zweckmäßigerweise kann für die Codierung eine Abbildungsvorschrift festgelegt sein, insbesondere in einem Speicher der Steuereinrichtung, durch welche eine Mehrzahl von Werten eines Betriebsparameters bzw. eines Betriebszustandes der Kühlvorrichtung bzw. des Schweißaggregats jeweils eine nichtnummerische optische Signalisierung des Wertes des Betriebsparameters bzw. des Betriebszustandes durch entsprechende Ansteuerung des Lichtmittels zugeordnet wird. Insofern wird eine sogenannte Urbildmenge in Form der Mehrzahl von Werten eines Betriebsparameter bzw. eines Betriebszustandes der Kühlvorrichtung bzw. des Schweißaggregats einer Bildmenge in Form einer Mehrzahl von nichtnummerischen optischen Signalisierungen zugeordnet. Eine solche Abbildungsvorschrift kann für eine Mehrzahl von Betriebsparameter der Kühlvorrichtung bzw. des Schweißaggregats abgelegt, sodass unterschiedliche Betriebsparameter unterschiedlich signalisiert werden können.

Um für den Benutzer eine einfache Erfassbarkeit bzw. Wahrnehmbarkeit der optischen Signalisierung bereitzustellen, kann vorgesehen sein, dass diese nichtnummerischen optischen Signalisierungen sich in Bezug auf das Spektrum der vom Leuchtmittel emittierten Lichtes, in Bezug auf eine zeitliche Abfolge der optischen Signalisierung, in Bezug auf eine Pulsbreite und/oder in Bezug auf eine zeitbezogene Frequenz der Signalisierung unterscheiden. Beispielsweise kann zur optischen Signalisierung einer Kühlmitteltemperatur, beispielsweise der Kühlmitteltemperatur im Kühlmittelbehälter eine farbliche Signalisierung zum Einsatz kommen, ausgehend von der Farbe Grün entsprechend einem Temperaturwert nahe Raumtemperatur und Rot entsprechend einer vorgegebenen Maximaltemperatur des Kühlmittels, wobei zwischen diesen Extremwerten liegenden Temperaturwerte durch im natürlichen Lichtspektrum zwischen den Farben Grün und Rot liegenden Farben angezeigt bzw. signalisiert werden können. Eine optische Signalisierung auf der Grundlage einer Änderung der Frequenz kann für das Beispiel einer Kühlmitteltemperatur so ausgeführt sein, dass eine Kühlmitteltemperatur im Bereich der Raumtemperatur über eine An/Aus-Signalisierung mit großer Zeitperiode dargestellt wird, während mit höher werdender Kühlmitteltemperatur die Zeitperiode des Ein- und Ausschaltens der Lichtquelle geringer und damit die Frequenz höher wird. Es ist leicht einzusehen, dass solche optische Signalisierungen schnell erfassbar ist und ein Nutzer auf diese Weise zumindest qualitativ über den Wert eines Betriebsparameters informiert gehalten werden kann.

Um die jeweilige Signalisierung bereitzustellen, wird erfindungsgemäß das Leuchtmittel der Schweißaggregat-Kühlvorrichtung entsprechend angesteuert, beispielsweise das Leuchtmittel zur Abgabe von Licht in einem vorgegebenen spektralen Bereich (Farbe) oder eine Ein/Aus-Signalisierung mit einer vorgegebenen Periodendauer bzw. Frequenz.

Da es in vielen Betriebssituationen ausreichend ist, den Nutzer über den Werte eines Betriebsparameters bzw. eines Betriebszustandes der Kühlvorrichtung bzw. des Schweißaggregats nur qualitativ unterrichtet zu halten, kann zweckmäßigerweise in Bezug auf die Codierung eine Mehrzahl von in einem Wertebereich liegende Werte eines Betriebsparameters mittels der Codierung in eine einzelne optische Signalisierung durch identisches Ansteuern des Leuchtmittels abgebildet werden. Beispielsweise kann es ausreichend sein, einen Temperaturbereich von beispielhaften 10°C mittels einer optischen Signalisierung darzustellen, bei welcher dieser Bereich bei dem Beispiel der spektralen Signalisierung einer einzelnen Farbe zugeordnet ist. Insofern kann zweckmäßigerweise die Codierung so festgelegt sein, dass eine vorgegebene Urbildmenge von Werten in der Abbildungsvorschrift einer kleineren Bildmenge von optischen Signalisierungen zugeordnet wird.

Die Erfindung wird im Folgenden unter Bezugnahme auf die beiliegenden Figuren durch das Beschreiben einiger Ausführungsformen erläutert, wobei
- Figur 1: eine Prinzipdarstellung einer Schweißaggregat-Kühlvorrichtung mit einem daran angeschlossenen Schweißgerät,
- Figur 2: eine erste Teilansicht auf die Kühlvorrichtung,
- Figur 3: eine weitere Teilansicht auf die Kühlvorrichtung, und
- Figur 4: die Kopplung der Steuereinrichtung der Schweißaggregat-Kühlvorrichtung mit mehreren Sensoren und zu steuernden Bauteilen,
zeigen.

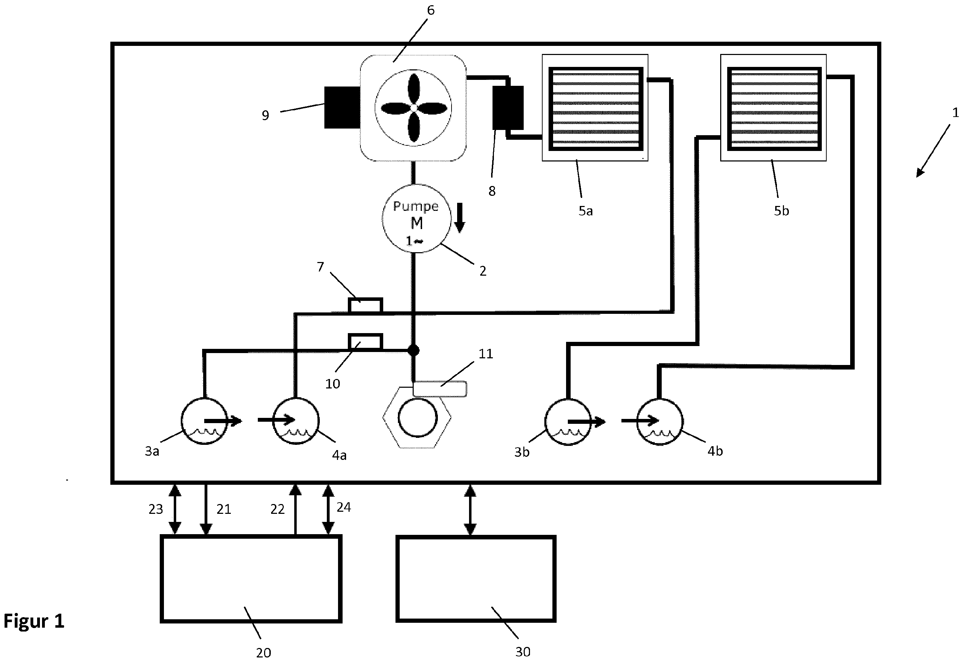

Figur 1 zeigt in einer Prinzipskizze den Aufbau einer Schweißaggregat-Kühlvorrichtung, die im Folgenden als Kühlgerät 1 bezeichnet wird, und die hier zur Kühlung eines Schweißaggregats eingerichtet ist, das in dem beschriebenen Beispiel als Schweißgerät mit einem Schweißbrenner ausgebildet und in Figur 1 mit dem Bezugszeichen 20 versehen ist. Das Kühlgerät 1 weist einen Vorlaufanschluss 3a und einen Rücklaufanschluss 4a auf, an welche das zu kühlende Schweißgerät 20 angeschlossen ist, wobei Kühlmittel über den Vorlaufanschluss 3a vom Kühlgerät 1 in das Schweißgerät 20 fließt, der Rücklauf erfolgt vom Schweißgerät 20 über den Rücklaufanschluss 4a des Kühlgeräts. In der Figur 1 sind die Leitungen außerhalb des Kühlgeräts 1 zum kühlenden Gerät, dem Schweißgerät 20, für den Vorlauf mit dem Bezugszeichen 21 und für den Rücklauf mit dem Bezugszeichen 22 versehen. Das Kühlmittel verläuft durch das zu kühlende Schweißgerät 20, nimmt Abwärme des Schweißgeräts, insbesondere des Schweißbrenners auf und verlässt das Schweißgerät 20 mit erhöhter Kühlmitteltemperatur über die angegebene Leitung 22 zurück zum Kühlgerät 1. In der beschriebenen Ausführungsform ist ein Temperatursensor 7 vorgesehen, welcher die Rücklauftemperatur des vom Schweißgerät 20 kommenden Kühlmittels erfasst bzw. misst. Das Kühlmittel durchläuft den Wärmetauscher 5a, in welchem die Temperatur des Kühlmittels wieder abgesenkt wird, abhängig von der spezifischen Funktionsweise des Wärmetauschers. Beispielsweise kann dieser Kühlrippen aufweisen, die mit einem Lüfter beblasen werden. Je nach Anwendung sind auch andere Arten von Wärmetauscher bzw. Wärmeübertrager möglich.

Nach der Abkühlung des Kühlmittels wird dieses in einen Kühlmittelbehälter 6 transportiert, welcher einen Füllstandsensor 9 aufweist. Zwischen dem Wärmetauscher 5a und dem Kühlmittelbehälter 6 ist ein Durchflusssensor 8 angeordnet. Das im Kühlmittelbehälter 6 gelagerte Kühlmittel wird durch die Kühlmittelpumpe 2 angesaugt und in Richtung zum Vorlaufanschluss 3a zur Bereitstellung des beschriebenen Kühlmittelkreislaufs gepumpt. Zur Vermeidung von Luft innerhalb des Kühlkreislaufs ist im Kühlgerät 1 ferner eine Entlüftungsvorrichtung 11 vorgesehen.

In der in Figur 1 angegebenen Ausführungsform weist das Kühlgerät 1 einen zweiten Wärmetauscher 5b auf, der über eine zweite Vorlaufeinrichtung 3b und eine zweite Rücklaufeinrichtung 4b angeschlossen werden kann.

In der in Figur 1 angegebenen Ausführungsform erfolgt die Versorgung des Kühlgeräts 1 mit elektrischer Energie über das Schweißgerät 20, wobei diesbezügliche Versorgungsleitungen 23 zwischen Schweißgerät 20 und Kühlgerät 1 angeschlossen sind. Darüber hinaus sind Kühlgerät 1 und Schweißgerät 20 mittels Signal- bzw. Steuerleitungen 24 gekoppelt, die auch als digitaler Bus zum Übertragen von Sensor- und Steuersignalen zwischen Kühlgerät 1 und Schweißgerät 20 ausgebildet sein können. Darüber hinaus können über diese Verbindung auch Betriebszustände wie Fehlerzustände etc. zwischen den beiden Geräten ausgetauscht werden.

Figur 1 zeigt ferner den Anschluss eines Zusatzgerätes 30 über weitere Signal- bzw. Steuerleitungen, die auch als Datenbus ausgebildet sein können, an das Kühlgerät 1, wobei dieses Zusatzgerät 30 unter Umständen einen eigenen Kühlkreislauf aufweisen kann, wobei über die Datenverbindung 31 Information zwischen dem Zusatzgerät 30 und dem Kühlgerät 1 ausgetauscht und am Kühlgerät 1 in noch zu beschreibender Art signalisiert werden können. Ein solches Zusatzgerät 30 kann beispielsweise zur Verwendung beim Tandem- oder Laserschweißen eingesetzt werden.

Zur genauen Analyse des Zustandes des Kühlgeräts 1 können neben den schon angegebenen Sensoren 7, 8, 9 und 10 weitere Sensoren umfasst sein, beispielsweise Temperatursensoren zur Messung der Temperaturen von Ein- und Austrittsluft am Wärmetauscher, einen Temperatursensor im Bereich der Wicklung des Kühlmittelpumpenmotors oder einen Sensor zu dessen Stromaufnahme. In ähnlicher Weise können Sensoren im angeschlossenen Schweißaggregat, hier dem Schweißgerät 20, integriert sein, deren Werte über die Leitungen 24 zwischen den Geräten austauschbar sind. Beispielsweise können darüber Temperaturwerte von Temperatursensoren, die im Schweißgerät 20 oder am Schweißbrenner jeweilige Betriebstemperaturen erfassen, übertragen werden. Dies betrifft auch allgemeine Betriebszustände wie Fehlermeldungen, die am Schweißaggregat 20 erzeugt und an das Kühlgerät 1 über die Leitung 24 übermittelbar sind.

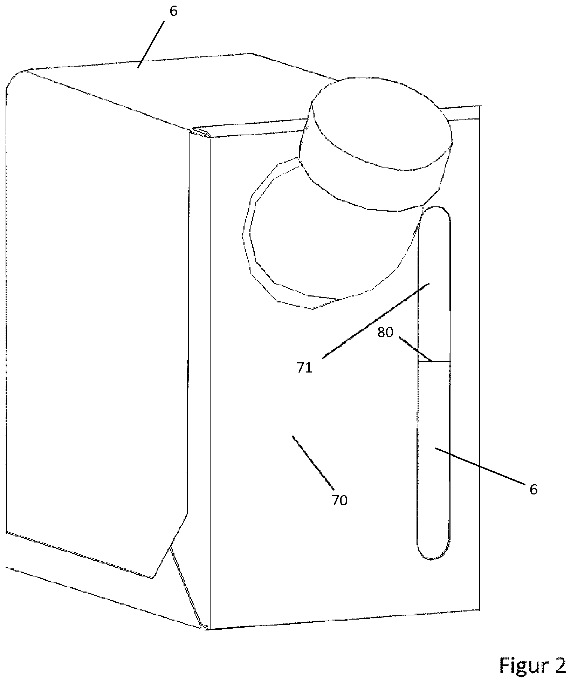

Figur 2 zeigt eine Teilseitenansicht auf das Kühlgerät 1, wobei die Gehäusewandung eine hier langgestreckte, vertikale Ausnehmung in Form eines Sehschlitzes 71 aufweist, in welchem der Kühlmitteltank 6 sichtbar ist. Da der Kühlmitteltank aus einem transluzenten Material hergestellt ist, kann der jeweilige Füllstand 80 des Kühlmittels im Tank durch einen Anwender von außen durch Sicht erfasst werden.

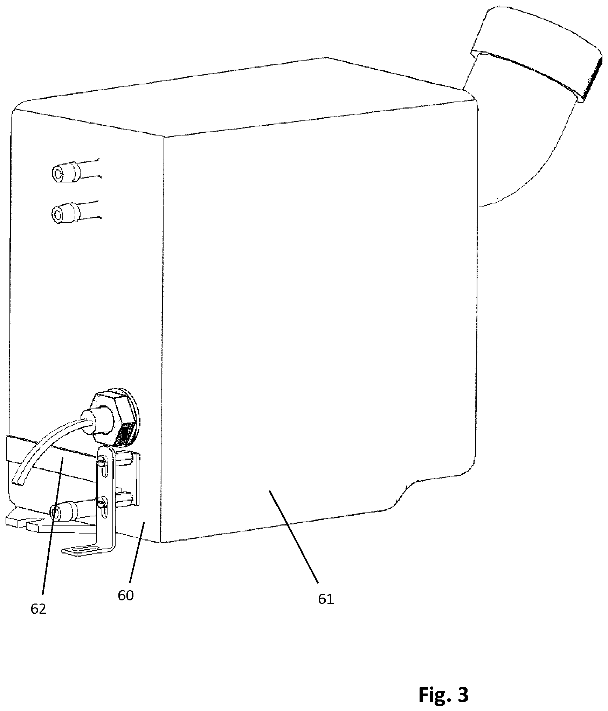

Figur 3 zeigt eine perspektivische Unteransicht auf den Kühlmittelbehälter 6 mit einer schrägen Ansicht auf die Behälterrückwand 60 und eine Behälterseitenwandung 61. An der Rückwand 60 des Kühlmittelbehälters 6 ist eine LED-Platine 62 angeordnet, wobei die LEDs in Richtung auf das Behälterinnere orientiert sind, sodass die LEDs Licht durch die transluzente Wandung des Behälters hindurch in das Innere des Behälters in Abhängigkeit ihrer elektrischen Ansteuerung abstrahlen. In einer nicht dargestellten, im Rahmen der Patentansprüche liegenden Ausführungsform kann auch vorgesehen sein, dass die LEDs in einem transparenten Block vergossen sind, welcher im Innern des Kühlmittelbehälters 6 angeordnet ist, sodass die LEDs direkt in das Innere des Behälters abstrahlen.

Das LED-Panel 62 ist ausgebildet, um je nach Ansteuerung Licht mit unterschiedlichem Spektralcharakter, d.h. Farben, abzustrahlen in einem Spektralbereich von grün bis in einen Rotbereich, wobei eine Vielzahl von Farbabstufungen zwischen diesen beiden Extremwerten einstellbar sind. Hierzu weist das Panel 62 eine entsprechende Treiberstufe auf, die einen Steuereingang umfasst, über den das LED-Panel 62 angesteuert werden kann. Das Kühlgerät 1 umfasst eine derartige Steuereinrichtung, welche die Sensordaten der im Kühlgerät 1 angeordneten Sensoren empfängt und den Betrieb der Kühlmittelpumpe in Abhängigkeit von internen und/oder externen Sensor- bzw. Steuersignalen steuert. Diese Steuereinrichtung steuert ferner die LED-Platine 62 und empfängt darüber hinaus auch Steuerungs- bzw. Sensordaten über die Leitungen 24 vom Schweißgerät 20.

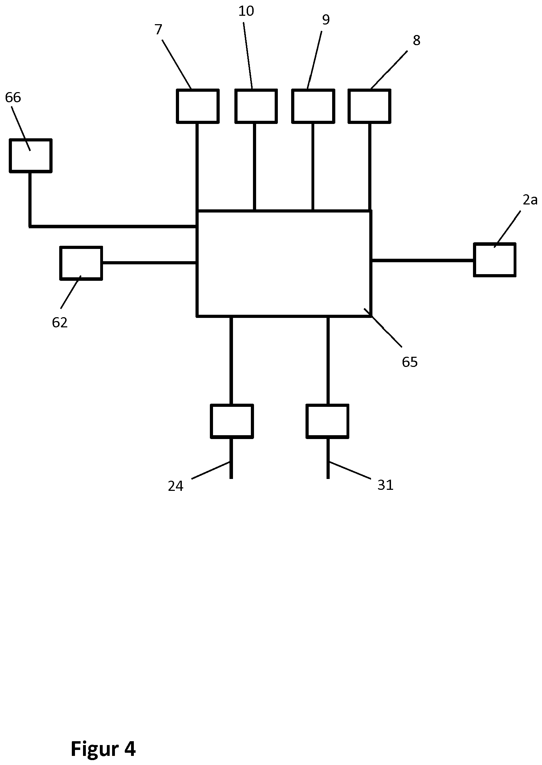

Figur 4 zeigt in einer entsprechenden Prinzipskizze die Kopplung der Steuereinrichtung 65 mit internen Sensoren zur Aufnahme der Sensordaten, mit der Kühlmittelpumpe 2 zu deren Steuerung, mit der LED-Platine 62 zu deren Ansteuerung sowie mit den Steuer- bzw. Signalleitungen 24, 31 Empfang von externen Sensor- bzw. Steuerdaten. In der beschriebenen Ausführungsform kann die Steuereinrichtung 65 als Mikroprozessor ausgebildet sein, welcher insbesondere die notwendigen Schnittstellen zur Digitalisierung von analogen Sensordaten und/oder digitale Schnittstellen zur Steuerung des LED-Panels sowie des Pumpenmotors 2a aufweist. Um eine Benutzereingabe zu ermöglichen, ist darüber hinaus eine Tastatur 66 an die Steuereinrichtung 65 angeschlossen, mit welcher ein Nutzer beispielsweise die nachfolgend noch zu erläuternde optische Signalisierung festlegen, beispielsweise einen der möglichen Betriebsparameter auswählen kann, dessen Wert vom erfindungsgemäß ausgebildeten Kühlgerät 1 signalisiert wird.

Allgemein und über die beschriebene Ausführungsform der Erfindung hinaus können notwendige Eingaben für das Kühlgerät 1, z. B. um eine Parametrierung durchzuführen, auch über das Schweißgerät 20 ausgeführt und an die Steuerung 65 übertragen werden. Die Steuerung 65 kann auch Bestandteil der Steuerung des Schweißgerätes 20 sein.

Das erfindungsgemäße Kühlgerät 1 ist eingerichtet, einen aktuellen Wert eines Betriebsparameters und/oder einen Betriebszustand des Kühlgerätes 1 oder auch einen des angeschlossenen Schweißaggregats, hier des Schweißgerätes 20, oder des Zusatzgerätes optisch zu signalisieren. In der beschriebenen Ausführungsform kann der optisch zu signalisierende Parameter bzw. Betriebszustand über die Tastatur 66 vom Nutzer eingegeben und festgelegt werden.

Grundsätzlich kann ein Nutzer in der beschriebenen Ausführungsform des Kühlgeräts 1 den Füllstand direkt durch den Sehschlitz 71 erkennen. Diese Erfassung des Füllstandes kann dadurch erleichtert werden, dass die Steuereinrichtung 65 das LED-Panel ansteuert, beispielsweise zum Beleuchten des Innern des Kühlmitteltanks 6, wobei das emittierte Licht eine vorgegebene Farbe aufweist. Damit ist auch bei schlechten Lichtverhältnissen bzw. bei einer geringen Befüllung des Kühlmittelbehälters eine Erfassung der Füllstandshöhe durch Blick auf den Sehschlitz möglich. Ist dagegen ein anderer Betriebsparameter, beispielsweise über die Eingabeeinrichtung 66 ausgewählt, wie die Kühlmitteltemperatur im Rücklauf des Kühlgeräts 1, erfasst die Steuereinrichtung 65 über den Sensor 7 den gewünschten Betriebsparameter und codiert diesen mit einer vorgegebenen Abbildungsvorschrift zur Ansteuerung des LED-Panels zur Erzeugung einer entsprechenden optischen Signalisierung, wobei die Werte in diesem Beispiel "farbcodiert" sind. Hierzu werden den Endtemperaturwerten eines vorgegebenen Temperaturbereichs die Farben Grün und Rot zugeordnet, wobei das LED-Panel zur Darstellung des entsprechenden Temperaturwertes bzw. Farbe angesteuert wird. In der Abbildungsvorschrift werden Zwischentemperaturwerte farblich entsprechend zugeordnet, derart, dass sich mit höheren Temperaturwerten die Signalisierung wie im natürlichen Spektrum von Grün in Richtung Rot ändert, wobei das LED-Panel in der Lage ist, die entsprechenden Farben bei diesbezüglicher Ansteuerung darzustellen. Der Benutzer kann somit durch einen kurzen Blick auf den Sehschlitz am Gehäuse des Kühlgeräts 1 ablesen, wie weit beispielsweise die Abschaltgrenze des Kühlgeräts bzw. des zu kühlenden Geräts (je nach Einstellung) noch entfernt ist.

Zumindest für einen der Sensoren kann die Speicherung eines Grenzwertes vorgesehen sein, bei dessen Überschreiten die Steuereinrichtung 65 eine entsprechende Signalisierung an das Schweißaggregat 20 übermittelt, beispielsweise eine Aufforderung zum Ausschalten und dann den Betrieb des Kühlgeräts 1 stoppt. In einer Ausführungsform kann auch vorgesehen sein, dass ein Erkennen eines Fehlerfalls über einen der Sensoren oder das Überschreiten einer vorgegebenen Schwelle als Fehlerfalls erkannt und durch entsprechendes Ansteuern des LED-Panel signalisiert wird, beispielsweise mittels einer in Warnfarbe abgegebenen Lichtpulsfolge.

Darüber hinaus kann auch vorgesehen sein, einen bestimmten Betriebszustand des Kühlgeräts 1 optisch zu signalisieren. Beispielsweise kann bei ausgeschalteter Kühlmittelpumpe und/oder Lüfter eine bestimmte Farbe signalisieren, dass das Kühlgerät 1 sich im Standby-Modus befindet und erst wenn die Kühlmittelpumpe arbeitet, weitere Farben oder Farbskalen für die Signalisierung verwendet werden. Vorteilhaft kann es dabei sein, eine spezielle Farbe für die Signalisierung eines oder mehrerer Fehlerzustände zu verwenden. In einer anderen Ausführungsform können diese auch durch unterschiedliche Blinkfolgen bzw. Blinkfrequenzen signalisiert werden. Eine solche Signalisierung kann beispielsweise auch für die Darstellung eines Wertes eines Betriebsparameters genutzt werden, beispielsweise derart, dass die Blinkfrequenz mit steigendem Wert des Betriebsparameters steigt.

### Bezugszeichenliste

- 1: Kühlgerät/**Schweißaggregat-Kühleinrichtung**
- 2: Kühlmittelpumpe
- 2a: Pumpenmotor
- 3a, b: Vorlaufanschluss
- 4a, b: Rücklaufanschluss
- 5a, b: Wärmetauscher
- 6: Kühlmitteltank/Kühlmittelbehälter
- 7: Rücklauf-Temperatursensor
- 8: Durchflusssensor
- 9: Füllstandsensor
- 10: Vorlauf-Temperatursensor
- 11: Entlüftungseinrichtung
- 20: Schweißaggregat/Schweißgerät
- 21: Vorlaufleitung
- 22: Rücklaufleitung
- 23: Elektrische Versorgungsleitung
- 24: Steuer-/Signalleitung, Datenbus
- 30: Zusatzgerät
- 31: Signal-/Steuerleitung, Datenbus
- 60: Rückwand des Kühlmittelbehälters
- 61: Seitenwand des Kühlmittelbehälters
- 62: LED-Platine/LED-Panel
- 65: Steuereinrichtung, Mikroprozessor
- 66: Eingabeeinrichtung, Tastatur
- 70: Gehäusewandung
- 71: Gehäuseausnehmung/Offenabschnitt/Sehschlitz
- 80: Füllstand

## Patentansprüche

1. Schweißaggregat-Kühlvorrichtung (1) umfassend einen Kühlmittel-Zulauf (4a, b) und einen Kühlmittel-Ablauf (3a, b) zum Verbinden mit einem Schweißaggregat (20), einen Kühlmittelbehälter (6), einen Wärmetauscher (5a, b) sowie eine Pumpeinrichtung, **dadurch gekennzeichnet, dass** der Kühlmittelbehälter (6) wenigstens einen zumindest lichtteildurchlässigen Wandabschnitt aufweist, dass ein Leuchtmittel zur Einstrahlung von Licht in das Innere des Kühlmittelbehälters (6) angeordnet ist, und dass eine Steuereinrichtung (65) angeordnet ist, welche zur optischen Kodierung eines Wertes eines Betriebsparameters bzw. eines Betriebszustands der Kühlvorrichtung (1) und/oder des Schweißaggregats (20) und zur Ansteuerung des Leuchtmittels zur optischen Signalisierung des jeweiligen kodierten Wertes des Betriebsparameters und/oder des Betriebszustandes eingerichtet ist.

2. Schweißaggregat-Kühlvorrichtung (1) nach Anspruch 1,
**dadurch gekennzeichnet, dass** die Schweißaggregat-Kühlvorrichtung (1) einen intern mit der Steuereinrichtung (65) verbundenen und ausgangsseitig mit dem Schweißaggregat (20) verbindbaren Anschluss zum Empfang von zumindest einem Sensorsignal und/oder einem Betriebszustand zugeordneter Information aufweist.

3. Schweißaggregat-Kühlvorrichtung (1) nach Anspruch 2,
**dadurch gekennzeichnet, dass** der Anschluss als bidirektional arbeitende Steuerschnittstelle ausgebildet ist.

4. Schweißaggregat-Kühlvorrichtung (1) nach Anspruch 1, 2 oder 3, **dadurch gekennzeichnet, dass** die Schweißaggregat-Kühlvorrichtung (1) ein Gehäuse aufweist, das den Kühlmittelbehälter (6) zumindest abschnittsweise umgibt, wobei das Gehäuse einen Offenabschnitt (71) aufweist, der im Bereich des zumindest lichtteildurchlässigen Wandabschnittes des Kühlmittelbehälters (1) liegt, sodass vom Leuchtmittel abgegebenes Licht durch den Offenabschnitt (71) die Schweißaggregat-Kühlvorrichtung (1) verlässt.

5. Schweißaggregat-Kühlvorrichtung (1) nach Anspruch 1, 2, 3 oder 4, **gekennzeichnet durch** eine mit der Steuerungseinrichtung (65) verbundene Eingabeeinrichtung (16) zur manuellen Auswahl des Betriebsparameters der Kühlvorrichtung (1) und/oder des Schweißaggregats (20), dessen Wert optisch zu kodierenden ist, sodass der Wert des ausgewählten Betriebsparameters über die zugeordnete Ansteuerung des Leuchtmittels optisch kodiert anzeigbar ist.

6. Schweißaggregat-Kühlvorrichtung (1) nach einem der Ansprüche 1 bis 5, **dadurch gekennzeichnet, dass** der durch Ansteuerung des Leuchtmittels optisch kodiert signalisierte Betriebsparameter bzw. Betriebszustand einer aus der Gruppe Betriebszustand der Schweißaggregat-Kühlvorrichtung, Betriebszustand des Schweißaggregats, Bewertung des Betriebszustandes der Schweißaggregat-Kühlvorrichtung, Bewertung des Betriebszustandes des Schweißaggregats, Füllstand des Kühlmittelbehälters der Schweißaggregat-Kühlvorrichtung, Kühlmittelzulauftemperatur der Schweißaggregat-Kühlvorrichtung, Kühlmittelrücklauftemperatur der Schweißaggregat-Kühlvorrichtung, Kühlmitteldurchflussmenge der Schweißaggregat-Kühlvorrichtung, Kühlmitteltemperatur im Behälter der Schweißaggregat-Kühlvorrichtung, Kühlmittelzulauftemperatur des Schweißaggregats, Kühlmittelrücklauftemperatur des Schweißaggregats und Betriebsstrom des Schweißaggregats ist.

7. Schweißaggregat-Kühlvorrichtung (1) nach einem der Ansprüche 1 bis 6, **dadurch gekennzeichnet, dass** die optisch kodierte Signalisierung des Betriebsparameters bzw. des Betriebszustandes unter Zuordnen von vorgegebenen Werten des jeweiligen Betriebsparameters einer jeweiligen Farb-Ansteuerung des Leuchtmittels bereitgestellt ist.

8. Schweißaggregat-Kühlvorrichtung (1) nach einem der Ansprüche 1 bis 7, **dadurch gekennzeichnet, dass** die optisch kodierte Signalisierung des Betriebsparameters bzw. des Betriebszustandes unter Zuordnen von vorgegebenen Werten des jeweiligen Betriebsparameters einer jeweiligen Blinkfolge-Ansteuerung des Leuchtmittels bereitgestellt ist.

9. Schweißaggregat-Kühlvorrichtung (1) nach einem der Ansprüche 1 bis 8, **dadurch gekennzeichnet, dass** das Leuchtmittel zumindest eine LED-Einrichtung umfasst, die zur Abgabe von Licht in unterschiedlichen Bereichen des Lichtspektrum eingerichtet ist.

10. Schweißaggregat-Kühlvorrichtung (1) nach einem der Ansprüche 1 bis 9, **dadurch gekennzeichnet, dass** das Leuchtmittel als Lichtzeile oder als flächiges Lichtpanel (62) ausgebildet ist.

11. Schweißaggregat-Kühlvorrichtung (1) nach einem der Ansprüche 1 bis 10, **dadurch gekennzeichnet, dass** das Leuchtmittel im Bereich eines Bodenabschnittes des Kühlmittelbehälters angeordnet ist.

12. Schweißaggregat-Kühlvorrichtung (1) nach einem der Ansprüche 1 bis 11, **dadurch gekennzeichnet, dass** die Schweißaggregat-Kühlvorrichtung (1) zur Signalisierung eines Fehler-Betriebszustandes der Schweißaggregat-Kühlvorrichtung (1) und/oder des Schweißaggregats (20) ausgebildet ist.

13. Schweißaggregat-Kühlvorrichtung (1) nach einem der Ansprüche 1 bis 12, **dadurch gekennzeichnet, dass** die Schweißaggregat-Kühlvorrichtung (1) und das Schweißaggregat (20) in einem gemeinsamen Gehäuse angeordnet und/oder mit einer gemeinsamen Steuerung betrieben sind.

14. Verfahren zum Betrieb einer Schweißaggregat-Kühlvorrichtung (1) mit einem von dieser gekühlten Schweißaggregat (20), wobei Kühlmittel von der Schweißaggregat-Kühlvorrichtung in das Schweißaggregat im Kreislauf bewegt wird, und wobei im Schweißaggregat durch Abwärmprozesse erwärmtes Kühlmittel zurück in die Schweißaggregat-Kühlvorrichtung fließt, dort in einem Wärmetauscher (5a, b) abgekühlt, in einem Kühlmittelbehälter (6) gelagert und wieder in das Schweißaggregat (20) bewegt wird,
**dadurch gekennzeichnet, dass** ein Wert eines Betriebsparameters bzw. eines Betriebszustands der Kühlvorrichtung (1) und/oder des Schweißaggregats (20) erfasst und kodiert wird zur Ansteuerung eines in das Innere des Kühlmittelbehälters (6) einstrahlenden Leuchtmittels zur optischen Signalisierung des Werts eines Betriebsparameters bzw. eines Betriebszustands der Kühlvorrichtung und/oder des Schweißaggregats durch einen zumindest lichtteildurchlässigen Wandabschnitt (60) des Kühlmittelbehälters (6) hindurch.

15. Verfahren nach Anspruch 14, **dadurch gekennzeichne**t, **dass** für die Kodierung eine Abbildungsvorschrift festgelegt wird, in welcher einer Mehrzahl von Werten eines Betriebsparameters bzw. eines Betriebszustands der Kühlvorrichtung (1) bzw. des Schweißaggregats (20) jeweils eine optische Signalisierung des Wertes des Betriebsparameters bzw. des Betriebszustands durch entsprechende Ansteuerung des Leuchtmittels zugeordnet wird.

16. Verfahren nach Anspruch 14, **dadurch gekennzeichnet, dass** sich die nichtnumerischen optische Signalisierungen in Bezug auf das Spektrum der vom Leuchtmittel emittierten Lichtes, in Bezug auf eine zeitliche Abfolge der optischen Signalisierung, in Bezug auf eine Pulsbreite und/oder in Bezug auf eine zeitbezogene Frequenz der Signalisierung unterscheiden.

17. Verfahren nach Anspruch 14, 15 oder 16, **dadurch gekennzeichnet, dass** eine Mehrzahl von in einem Wertebereich liegende Werte eines Betriebsparameters mittels der Kodierung in eine einzelne optische Signalisierung durch identisches Ansteuern des Leuchtmittels abgebildet wird.

## Claims

1. Welding unit cooling device (1) comprising a coolant feed (4a, b) and a coolant discharge (3a, b) for connecting with a welding unit (20), a coolant tank (6), a heat exchanger (5a, b) as well as a pumping device, **characterized in that** the coolant tank (6) has at least one wall portion that is at least partially permeable to light, that a lighting means is placed for irradiation of light into the inside of the coolant tank (6) and that a control device (65) is placed that is designed for the optical encoding of a value of an operating parameter or of an operating state of the cooling device (1) and/or of the welding unit (20) and for controlling the lighting means for the optical signaling of the respectively encoded value of the operating parameter and/or of the operating state.

2. Welding unit cooling device (1) according to claim 1, **characterized in that** the welding unit cooling device (1) has a connection that is internally connected with the control device (65) and that is connectable on the outlet side with the welding unit (20) for receiving at least one sensor signal and/or information associated to an operating state.

3. Welding unit cooling device (1) according to claim 2, **characterized in that** the connection is designed as a bidirectional control interface.

4. Welding unit cooling device (1) according to claim 1, 2 or 3, **characterized in that** the welding unit cooling device (1) has a housing that surrounds the coolant tank (6) at least in sections, wherein the housing has an open portion (71) that is situated in the area of the wall portion of the coolant tank (6) hat is at least partially permeable to light so that light emitted by the lighting means exits the welding unit cooling device (1) through the open portion (71).

5. Welding unit cooling device (1) according to claim 1, 2, 3 or 4, **characterized by** an input device (16) connected with the control device (65) for the manual selection of the operating parameter of the cooling device (1) and/or of the welding unit (20), the value of which has to be optically encoded so that the value of the selected operating parameter can be displayed encoded by the associated control of the lighting means.

6. Welding unit cooling device (1) according to one of the claims 1 to 5, **characterized in that** the operating parameter or operating state optically encoded signaled by controlling the lighting means is one of the group operating state of the welding unit cooling device, operating state of the welding unit, evaluation of the operating state of the welding unit cooling device, filling level of the coolant tank of the welding unit cooling device, coolant feed temperature of the welding unit cooling device, coolant return temperature of the welding unit cooling device, coolant flow rate of the welding unit cooling device, coolant temperature in the tank of the welding unit cooling device, coolant feed temperature of the welding unit, coolant return temperature of the welding unit and drive current of the welding unit.

7. Welding unit cooling device (1) according to one of the claims 1 to 6, **characterized in that** the optically encoded signaling of the operating parameter or of the operating state is made available by associating predefined values of the respective operating parameter of a respective color control of the lighting means.

8. Welding unit cooling device (1) according to one of the claims 1 to 7, **characterized in that** the optically encoded signaling of the operating parameter or of the operating state is made available by associating predefined values of the respective operating parameter of a respective blink sequence of the lighting means.

9. Welding unit cooling device (1) according to one of the claims 1 to 8, **characterized in that** the lighting means comprises at least one LED device that is designed for emitting light in different regions of the light spectrum.

10. Welding unit cooling device (1) according to one of the claims 1 to 9, **characterized in that** the lighting means is designed as a light line or planar light panel (62).

11. Welding unit cooling device (1) according to one of the claims 1 to 10, **characterized in that** the light means is placed in the area of a bottom portion of the coolant tank.

12. Welding unit cooling device (1) according to one of the claims 1 to 11, **characterized in that** the welding unit cooling device (1) is designed for signaling an error operating state of the welding unit cooling device (1) and/or of the welding unit (20).

13. Welding unit cooling device (1) according to one of the claims 1 to 12, **characterized in that** the welding unit cooling device (1) and the welding unit (20) are placed in a common housing and/or are operated with a common control.

14. Method for operating a welding unit cooling device (1) with a welding unit (20) cooled therewith, wherein coolant is moved from the welding unit cooling device into the welding unit in circulation and wherein coolant heated by waste heat processes flows back to the welding unit cooling device, is cooled there in a heat exchanger (5a, b), is stored in a coolant tank (6) and is moved back to the welding unit (20), **characterized in that** a value of an operating parameter of an operating state of the cooling device (1) and/or of the welding unit (20) is detected and encoded for controlling a lighting means irradiating into the inside of the coolant tank (6) for the optical signaling of the value of an operating parameter or of an operating state of the cooling device and/or of the welding unit through a wall portion (6) of the coolant tank (6) that is at least partially permeable to light.

15. Method according to claim 14, **characterized in that** a mapping rule is fixed for the encoding in which an optical signaling of the value of the operating parameter or of the operating state is respectively associated to a multitude of values of an operating parameter or of an operating state of the cooling device (1) or of the welding unit (20).

16. Method according to claim 14, **characterized in that** the non-numeric optical signalings differ with respect to the spectrum of the light emitted by the lighting means, with respect to a time sequence of the optical signaling with respect to a pulse width and/or with respect to a time related frequency of the signaling.

17. Method according to claim 14, 15 or 16, **characterized in that** a multitude of values situated in a range of values of an operating parameter is represented by means of the encoding into a single optical signaling by identical controlling of the lighting means.

## Revendications

1. Dispositif de refroidissement (1) de groupe de soudage qui comprend une arrivée d'agent de refroidissement (4a, b) et une évacuation d'agent de refroidissement (3a, b) pour la jonction avec un groupe de soudage (20), un réservoir d'agent de refroidissement (6), un échangeur thermique (5a, b) ainsi qu'un dispositif de pompage, **caractérisé en ce que** le réservoir d'agent de refroidissement (6) présente au moins une portion de paroi partiellement perméable à la lumière, qu'il est placé un moyen d'éclairage pour irradier de lumière l'intérieur du réservoir d'agent de refroidissement (6) et qu'il est placé un dispositif de commande (65) qui est agencé pour le codage optique d'une valeur d'un paramètre de fonctionnement ou d'un état de fonctionnement du dispositif de refroidissement (1) et/ou du groupe de soudage (20) et pour commander le moyen d'éclairage pour la signalisation optique de la valeur codé respective du paramètre de fonctionnement et/ou de l'état de fonctionnement.

2. Dispositif de refroidissement (1) de groupe de soudage selon la revendication 1, **caractérisé en ce que** le dispositif de refroidissement (1) de groupe de soudage présente un branchement relié de manière interne au dispositif de commande (65) et qui peut être relié côté sortie au groupe de soudage (20) pour la réception d'au moins un signal de capteur et/ou d'une information associée à un état de fonctionnement.

3. Dispositif de refroidissement (1) de groupe de soudage selon la revendication 2, **caractérisé en ce que** le branchement est configuré comme une interface de commande bidirectionnelle.

4. Dispositif de refroidissement (1) de groupe de soudage selon la revendication 1, 2 ou 3, **caractérisé en ce que** le dispositif de refroidissement (1) de groupe de soudage présente un bâti qui entoure au moins partiellement le réservoir d'agent de refroidissement (6), cependant que le bâti présente une portion ouverte (71) qui se situe dans la zone de la portion de paroi partiellement perméable à la lumière du réservoir d'agent de refroidissement (6) si bien que de la lumière émise par le moyen d'éclairage quitte le dispositif de refroidissement (1) de groupe de soudage par la portion ouverte (71).

5. Dispositif de refroidissement (1) de groupe de soudage selon la revendication 1, 2, 3 ou 4, **caractérisé par** un dispositif d'entrée (16) relié au dispositif de commande (65) pour la sélection manuelle du paramètre de fonctionnement du dispositif de refroidissement (1) et/ou du groupe de soudage (20) dont la valeur doit être codée de manière optique si bien que la valeur du paramètre de fonctionnement sélectionné peut être affichée en étant codée optiquement par la commande associée du moyen d'éclairage.

6. Dispositif de refroidissement (1) de groupe de soudage selon l'une des revendications 1 à 5, **caractérisé en ce que** le paramètre de fonctionnement ou l'état de fonctionnement signalisé et codé optiquement par la commande du moyen d'éclairage est l'un du groupe état de fonctionnement du dispositif de refroidissement du groupe de soudage, état de fonctionnement du groupe de soudage, évaluation de l'état de fonctionnement du dispositif de refroidissement du groupe de soudage, état de remplissage du réservoir d'agent de refroidissement du dispositif de refroidissement du groupe de soudage, température d'arrivée de l'agent de refroidissement du dispositif de refroidissement du groupe de soudage, température de retour de l'agent de refroidissement du dispositif de refroidissement du groupe de soudage, débit de l'agent de refroidissement du dispositif de refroidissement du groupe de soudage, température de l'agent de refroidissement dans le réservoir d'agent de refroidissement du dispositif de refroidissement du groupe de soudage, température d'arrivée de l'agent de refroidissement du groupe de soudage, température de retour de l'agent de refroidissement du groupe de soudage et courant de fonctionnement du groupe de soudage.

7. Dispositif de refroidissement (1) de groupe de soudage selon l'une des revendications 1 à 6, **caractérisé en ce que** la signalisation codée de manière optique du paramètre de fonctionnement ou de l'état de fonctionnement est mise à disposition par l'association de valeurs prédéfinies du paramètre de fonctionnement respectif d'une commande de couleur respective du moyen d'éclairage.

8. Dispositif de refroidissement (1) de groupe de soudage selon l'une des revendications 1 à 6, **caractérisé en ce que** la signalisation codée de manière optique du paramètre de fonctionnement ou de l'état de fonctionnement est mise à disposition par l'association de valeurs prédéfinies du paramètre de fonctionnement respectif d'une commande de clignotement respective du moyen d'éclairage.

9. Dispositif de refroidissement (1) de groupe de soudage selon l'une des revendications 1 à 8, **caractérisé en ce que** le moyen d'éclairage comprend au moins un dispositif à LED qui est agencé pour émettre de la lumière dans différentes régions du spectre lumineux.

10. Dispositif de refroidissement (1) de groupe de soudage selon l'une des revendications 1 à 9, **caractérisé en ce que** le moyen d'éclairage est configuré comme une ligne de lumière ou un panneau lumineux plat (62).

11. Dispositif de refroidissement (1) de groupe de soudage selon l'une des revendications 1 à 10, **caractérisé en ce que** le moyen d'éclairage est placé dans la zone d'une portion de fond du réservoir d'agent de refroidissement.

12. Dispositif de refroidissement (1) de groupe de soudage selon l'une des revendications 1 à 11, **caractérisé en ce que** le dispositif de refroidissement (1) de groupe de soudage est agencé pour la signalisation d'un état de fonctionnement défectueux du dispositif de refroidissement (1) de groupe de soudage et/ou du groupe de soudage (20).

13. Dispositif de refroidissement (1) de groupe de soudage selon l'une des revendications 1 à 11, **caractérisé en ce que** le dispositif de refroidissement (1) de groupe de soudage et le groupe de soudage (20) sont placés dans un bâti commun et/ou fonctionnent avec une commande commune.

14. Procédé pour faire fonctionner un dispositif de refroidissement (1) de groupe de soudage avec un dispositif de soudage (20) refroidi par celui-ci, cependant que l'agent de refroidissement est déplacé du dispositif de refroidissement de groupe de soudage dans le groupe de soudage en circulation et cependant que l'agent de refroidissement chauffé dans le groupe de soudage par des processus de chaleur perdue retourne dans le dispositif de refroidissement de groupe de soudage, y est refroidi dans un échangeur thermique (5a, b), est stocké dans un réservoir d'agent de refroidissement (6) et est déplacé à nouveau dans le groupe de soudage,
**caractérisé en ce qu'**une valeur d'un paramètre de fonctionnement ou d'un état de fonctionnement du dispositif de refroidissement (1) et/ou du groupe de soudage (20) est détectée et codée pour la commande d'un moyen d'éclairage qui irradie dans l'intérieur du réservoir d'agent de refroidissement (6) pour la signalisation optique de la valeur d'un paramètre de fonctionnement ou d'un état de fonctionnement du dispositif de refroidissement et/ou du groupe de soudage en traversant une portion de paroi partiellement perméable à la lumière du réservoir d'agent de refroidissement (6).

15. Procédé selon la revendication 14, **caractérisé en ce qu'**une règle d'application est fixée pour le codage dans laquelle une signalisation optique de la valeur du paramètre de fonctionnement ou de l'état de fonctionnement est associée par une commande correspondante du moyen d'éclairage à une multitude de valeurs d'un paramètre de fonctionnement ou d'un état de fonctionnement du dispositif de refroidissement (1) ou du groupe de soudage (20).

16. Procédé selon la revendication 14, **caractérisé en ce que** les signalisations optiques non numériques diffèrent pour ce qui est du spectre de la lumière émise par le moyen d'éclairage, pour ce qui est d'une séquence temporelle de la signalisation optique, pour ce qui est d'une largeur d'impulsions et/ou pour ce qui est d'une fréquence relative au temps de la signalisation.

17. Procédé selon la revendication 14, **caractérisé en ce qu'**une multitude de valeurs d'un paramètre de fonctionnement qui se situent dans une plage de valeurs est représentée au moyen du codage en une seule signalisation optique par une commande identique du moyen d'éclairage.
